(19) Europäisches Patentamt
European Patent Office
Office européen des brevets

(11) **EP 4 668 229 A1**

(12) **EUROPEAN PATENT APPLICATION**

(43) Date of publication:
**24.12.2025 Bulletin 2025/52**

(21) Application number: **25184139.1**

(22) Date of filing: **20.06.2025**

(51) International Patent Classification (IPC):
**G06V 10/82** *(2022.01)*

(52) Cooperative Patent Classification (CPC):
**G06V 10/82**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **21.06.2024 GB 202408944**
**21.06.2024 GB 202408943**

(71) Applicants:
• **Rolls-Royce plc**
**London N1 9FX (GB)**

• **Rolls-Royce Deutschland Ltd & Co KG**
**15827 Blankenfelde-Mahlow (DE)**

(72) Inventors:
• **Voutchkov, Ivan**
**Derby, DE24 8BJ (GB)**
• **Nasti, Adele**
**15827 Blankenfelde-Mahlow (DE)**
• **Keane, Andrew**
**Derby, DE24 8BJ (GB)**

(74) Representative: **Rolls-Royce plc**
**P.O. Box 31**
**IP Department (SinA-48)**
**Derby Derbyshire DE24 8BJ (GB)**

(54) **TRAINING**

(57) A method of training a conditional Generative Adversarial Network (cGAN) is disclosed. The cGAN (102) has a generator (305) and a discriminator (306). The method comprises obtaining a collection of images of components (301), each image having a physical parameter value (302) relating to the component associated therewith, for each one of the collection of images of components, embedding a plurality of graphical encodings into the image that encode the associated phy- sical parameter value, and training the cGAN using the collection of images of components with their embedded plurality of graphical encodings.

FIG. 3

EP 4 668 229 A1

**Description**

**CROSS REFERENCE TO RELATED APPLICATIONS**

This application claims the benefit of priority from United Kingdom Patent Application Nos 2408943.5 and 2408944.3, both filed June 21, 2024, each of which are incorporated herein by reference in their entirety.

**FIELD**

This disclosure relates to the training of Conditional Generative Adversarial Networks.

**BACKGROUND**

Conditional Generative Adversarial Networks (cGANs) are a popular deep learning architecture for image classification and generation. Their accuracy can be extremely high when they have access to large quantities of labelled training data. However, the learning process can be hindered in applications where labelled training data is sparse. In these circumstances, the input data - in the form of images - may be augmented to improve the training process.

**SUMMARY**

In an aspect, there is provided a method comprising training a conditional Generative Adversarial Network (cGAN), the cGAN having a generator and a discriminator, said method comprising:

obtaining a collection of images of components, each image having a physical parameter value relating to the component associated therewith;
for each one of the collection of images of components, embedding a plurality of graphical encodings into the image that encode the associated physical parameter value;
training the cGAN using the collection of images of components with their embedded plurality of graphical encodings.

In an embodiment, the training process comprises optimising the generator and the discriminator using a loss function incorporating an error metric that measures the difference in values encoded by the plurality of graphical encodings.
In an embodiment, the plurality of graphical encodings comprises one or more of:

bars;
glyphs.

In an embodiment, the plurality of graphical encodings of the physical parameter value are different kinds of graphical encodings.
In an embodiment, the method further comprises, for each one of the collection of images of components, embedding one or more calibration graphics into the image to calibrate the plurality of graphical encodings against.
In an embodiment, a position of one or more calibration graphics is varied between each image.
In an embodiment, the physical parameter value is one of:

a physical input parameter value relating to properties of the component;
a physical output parameter value relating to performance of the component.

In an embodiment, in which the method further comprises, for each image in the collection, embedding a plurality of graphical encodings of a plurality of physical input parameter values, each of which relates to properties of the component.
In an embodiment, the method further comprises, for each image in the collection, embedding a plurality of graphical encodings of a plurality of physical output parameter values, each of which relates to performance of the component.
In an embodiment, the physical parameter value is a physical output parameter value relating to performance of the component, and the method further comprises:

for each image in the collection, labelling the image as a member of one of a plurality of groups corresponding to the physical output parameter value, thereby creating a collection of labelled images;

training the cGAN is performed using the collection of labelled images, and includes training the discriminator to discriminate between images belonging to the plurality of groups.

In an embodiment, the labelling process comprises an equal binning procedure, such that the maximum difference in size between the plurality of groups is one.

In an embodiment, the method further comprises training the generator of the cGAN to generate images of components that are labelled as a member of one of the plurality of groups by the discriminator.

In an embodiment, images in the collection of images of components are one of:

photographs;
optical three-dimensional scans;
X-ray images;
computationally-generated images.

In another aspect, there is provided instructions executable by a computer that, when executed by the computer, cause the computer to perform the aforesaid method.

In an embodiment, the instructions are encoded on a computer-readable medium.

**BRIEF DESCRIPTION OF THE DRAWINGS**

Embodiments will now be described by way of example only with reference to the accompanying drawings, in which:

Figure 1 shows a training framework for a cGAN;
Figure 2 shows the cGAN system of Figure 1 in more detail;
Figure 3 shows a mapping of data and functional modules in the memory of the cGAN system of Figure 2;
Figure 4 shows the generator network of Figure 3 in more detail;
Figure 5 shows the discriminator network of Figure 3 in more detail;
Figure 6 shows the procedure for training the cGAN system of Figure 1;
Figure 7 shows the procedure for embedding graphical encodings in images of Figure 6;
Figures 8A, 8B, 8C and 8D show locations of input and output data associated with an example;
Figure 9 shows how the image encoder of Figure 3 embeds graphical encodings in images;
Figure 10A shows a distribution of image data with equal bin counts;
Figure 10B shows a distribution of image data with equal bin widths; and
Figure 11 is a comparison of the output of the cGAN system compared with a thermo-mechanical simulation according to an example.

**DETAILED DESCRIPTION**

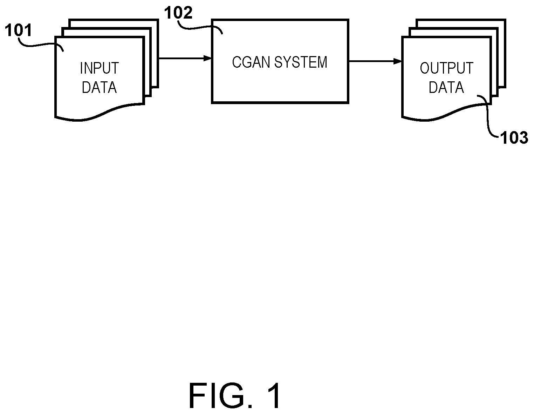

A high-level depiction of a training framework for a cGAN is shown in Figure 1. Input data 101 is provided to a cGAN system 102 which is trained using the input data 101. The cGAN system 102 may then be used to synthesize output data 103.

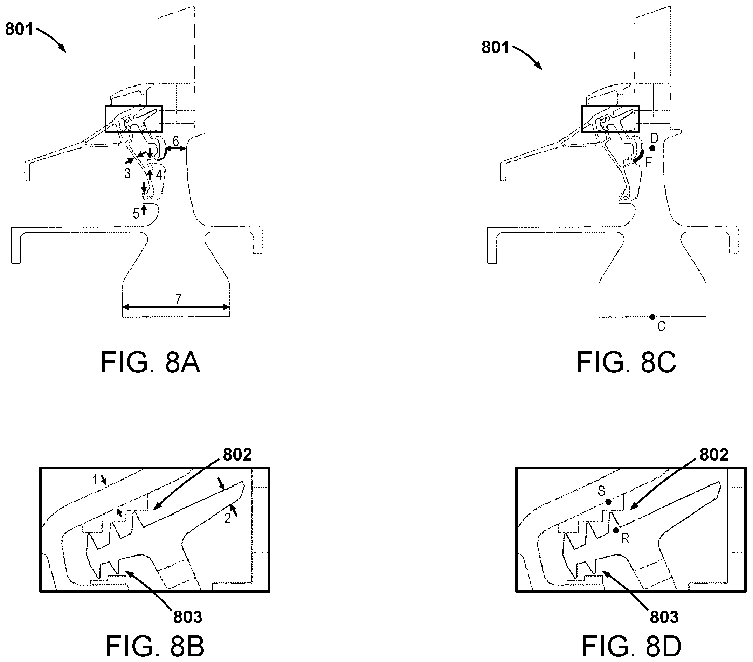

In the present embodiment, the input data 101 is a collection of images of components, each of which as one or more associated physical parameter values relating to the component. In an example that will be expanded upon with reference to Figure 8A onwards, the components could be a seal in a gas turbine engine and the physical parameter could be the static thickness of the seal. Additional physical parameters could be the rotor thickness of the seal, or the arm thickness of the seal, etc. In other envisaged examples, the component could be an aerofoil, and the physical parameter could be the chord length. Additional physical parameters could be the camber, or the dihedral, or the span, etc. Such physical parameters may be said to be indicative of "input" physical parameters to the design of the component and relate to its properties. Similarly, the physical parameters may be indicative of "output" physical parameters that relate to its performance, and are a consequence of the input physical parameters. For example, the gas turbine seal may have an output physical parameter such as its mass which is a consequence of its volume and material density. Similarly an aerofoil may have an output physical parameter such as lift or drag, which are a consequence of its geometric definition.

It will be appreciated that the component could be any other component or system susceptible to being depicted in an image, and having a physical parameter associated therewith. The images themselves may be photographs, optical three-dimensional scans, X-ray images, computationally-generated images, or any other type of image depicting a component.

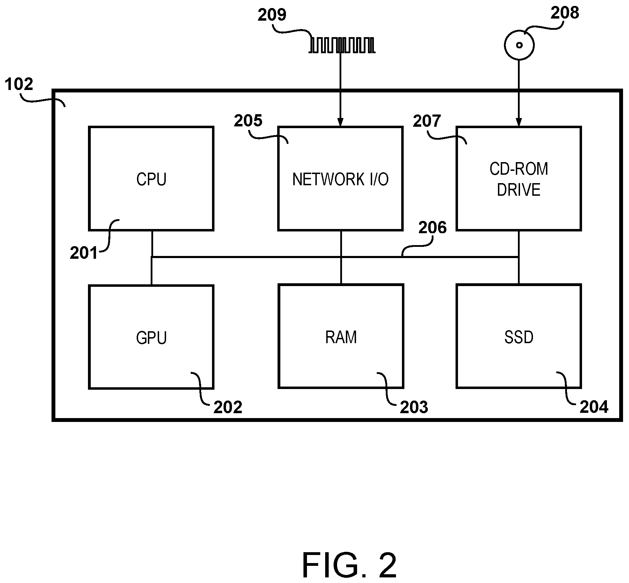

The cGAN system 102 is shown in more detail in Figure 2. The cGAN system 102 comprises a processor which in the present embodiment is a central processing unit (CPU) 201. In this instance, the CPU 201 is a single Intel (RTM) Core i9-10980XE processor, having 18 on-die processing cores operating at 3.00 gigahertz. It is of course possible that other processor configurations could be provided, and indeed several such processors could be present to provide a high degree of parallelism in the execution of instructions.

In this embodiment the CPU 201 is accompanied by a graphics processing unit (GPU) 202. In this specific case, the GPU 202 is a discrete nVidia (RTM) A4000 GPU operating at 735 MHz and having 16 gigabytes of on-board GDDR6 graphics memory. As will be appreciated by those skilled in the art, the extreme degree of parallelism exhibited by graphics processing units is well-suited to machine learning tasks, including both training and inference. Of course, other GPU configurations may be provided, for example multiple discrete GPUs could be installed in the cGAN system 102. Furthermore, the GPU 202 could be omitted and all processing performed on the CPU 201.

Over and above registers and cache in the CPU 201 and the graphics memory in the GPU 202, system memory is provided for by random access memory (RAM) 203, which in this example is double data rate (DDR) SDRAM totaling 128 gigabytes in capacity. Forming part of the overall memory system, RAM 203 allows storage of frequently used instructions and data structures by the cGAN system 102. A portion of RAM 203 is reserved as shared memory, which allows high speed inter-process communication.

Permanent storage is provided by a storage device such a solid-state disk (SSD) 204, which in this instance has a capacity of one terabyte. SSD 204 stores operating system, application data and may also provide virtual memory for the cGAN system 102. In alternative embodiments, a hard disk drive could be provided, or several storage devices provided and configured as a RAID array to improve data access times and/or redundancy.

Together, the registers and cache in CPU 201, the memory in the GPU 202, the RAM 203 and the SSD 204 all provide memory for this embodiment of the cGAN system 102 and it will be appreciated that at any one moment data could be stored in any of these locations.

A network interface 205 allows the cGAN system 102 to connect to a packet-based network such as the Internet.

The CPU 201, GPU 202, RAM 203, solid-state disk 204, and network interface 205 are all connected by a system bus 206 to facilitate communication and transfer of data.

An optical drive, such as a CD-ROM drive 207 is also connected to the bus 206, and may receive a non-transitory computer readable medium such as an optical disk, for example CD-ROM 208. The CD-ROM 208 comprises computer-readable instructions to enable the data augmentation process to be executed. These are, in use, installed on solid-state disk 204, loaded into RAM 203 and then executed by CPU 201 or dispatched to the GPU 202. Alternatively, these instructions may be downloaded from a network via the network interface 205 as packet data 209.

It will be appreciated that the above system is merely an example of a configuration of system that can fulfil the role of the cGAN system 102. Any other system having a processing device and memory could be used. Thus, in an alternative embodiment it is envisaged that an application-specific integrated circuit (ASIC) or field-programmable gate array (FPGA) could be configured with the same instructions so as to perform substantially the same operations as the cGAN system 102.

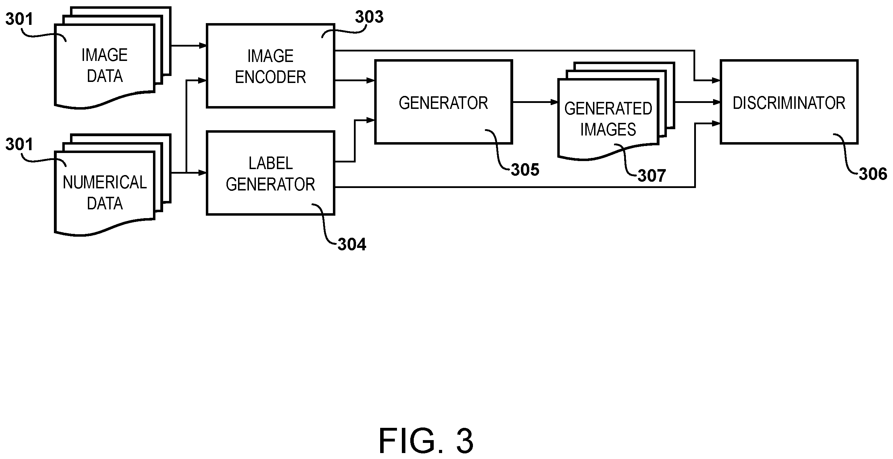

A mapping of data and functional modules in the memory of the cGAN system 102 is shown in Figure 3. The structure of the cGAN system is substantially similar to that set out in United States Patent Application No 17/967,620 which is currently assigned to the present Applicant. Hence, image data 301 and numerical data 302 are initially received at an image encoder 303. In this context, the input data 301 are the collection of images of components described previously, and the numerical data 302 are the one or more physical parameter values associated with each image. The image encoder 303 is configured to embed a plurality of graphical encodings into each image that encodes the one or more associated physical parameter values. The numerical data 302 are also provided to a label generator 304 which generates training labels for the corresponding images.

Images from the image encoder 303 and labels from the label generator are provided to a generator network 305 and to a discriminator network 306. The generator network 305 produces generated images 307 which are also provided to the discriminator network 306. The generator network 305 is configured to, given a label and random noise as an input, produce generated images 307 that mimic the image data 301. The discriminator network 306 is configured to classify input images as either real or fake. Training proceeds by training the generator network 305 to produce images that convince the discriminator network 306 that its generated images 307 are real. The discriminator network 306 is simultaneously trained to distinguish between real and synthetic generated images 307.

In the present embodiment, the parameters for the cGAN system 102 are as set out in Table 1:

**Table** 1

| Parameter | Value |
|---|---|
| Image resolution | 224×256 |
| Batch size | 50 |

(continued)

| Parameter | Value |
|---|---|
| Number of filters | 110 |
| Number of categories | 6 |
| Number of latent variables | 20 |
| Latent variables distribution | random normal [-4.3, 4.3] |
| Generator learning rate | 0.0002 |
| Discriminator learning rate | 0.0001 |

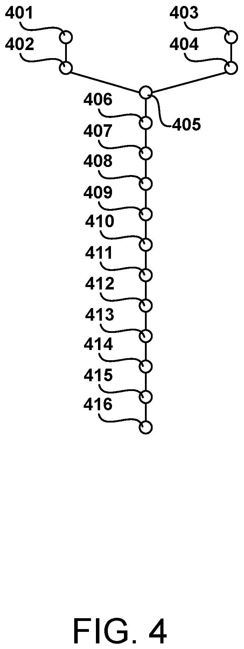

An embodiment of the generator network 305 is shown in Figure 4. The network layers are set out in Table 2, with properties configured to match the parameters of the cGAN system 102:

Table 2

| Layer | Name | Description |
|---|---|---|
| 401 | noise | 20 features (latent variables) |
| 402 | proj | Project and reshape layer with output size 24 28 1024 |
| 403 | labels | 1 feature |
| 404 | emb | Reshape layer with output size 24 28 |
| 405 | cat | Concatenation of 2 inputs along dimension 3 |
| 406 | tconv1 | 440 5×5×1025 transposed convolutions with stride [1 1] and cropping [0 0 0 0] |
| 407 | bn1 | Batch normalization with 440 channels |
| 408 | leakyRelu1 | Leaky ReLU with scale 0.2 |
| 409 | tconv2 | 220 5×5×440 transposed convolutions with stride [2 2] and cropping 'same' |
| 410 | bn2 | Batch normalization with 220 channels |
| 411 | leakyRelu2 | Leaky ReLU with scale 0.2 |
| 412 | tconv3 | 110 5×5×220 transposed convolutions with stride [2 2] and cropping 'same' |
| 413 | bn3 | Batch normalization with 110 channels |
| 414 | leakyRelu3 | Leaky ReLU with scale 0.2 |
| 415 | tconv4 | 3 5×5×110 transposed convolutions with stride [2 2] and cropping 'same' |
| 416 | tanh | Hyperbolic tangent |

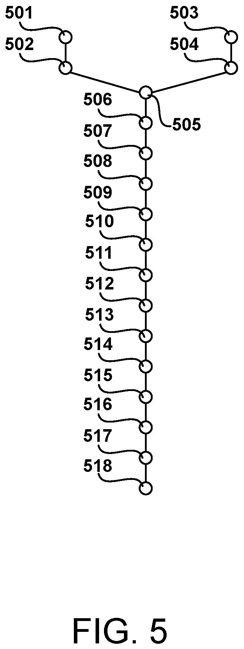

A specific embodiment of the discriminator network 306 is shown in Figure 5. The network layers are set out in Table 3 with properties configured to match the parameters of the cGAN system 102:

Table 3

| Layer | Name | Description |
|---|---|---|
| 501 | images | 224×256×3 images |
| 502 | dropout | 75% dropout |
| 503 | labels | 1 feature |
| 504 | emb | Reshape layer with output size 224 256 |
| 505 | cat | Concatenation of 2 inputs along dimension 3 |
| 506 | conv1 | 110 5×5×4 convolutions with stride [22] and padding 'same' |
| 507 | bn1 | Batch normalization with 110 channels |

(continued)

| Layer | Name | Description |
|-------|------|-------------|
| 508 | leakyRelu1 | Leaky ReLU with scale 0.2 |
| 509 | conv2 | 220 5×5×110 convolutions with stride [2 2] and padding 'same' |
| 510 | bn2 | Batch normalization with 220 channels |
| 511 | leakyRelu2 | Leaky ReLU with scale 0.2 |
| 512 | conv3 | 440 5×5×220 convolutions with stride [2 2] and padding 'same' |
| 513 | bn3 | Batch normalization with 440 channels |
| 514 | leakyRelu3 | Leaky ReLU with scale 0.2 |
| 515 | conv4 | 880 5×5×440 convolutions with stride [2 2] and padding 'same' |
| 516 | bn4 | Batch normalization with 880 channels |
| 517 | leakyRelu4 | Leaky ReLU with scale 0.2 |
| 518 | conv5 | 1 14×16×880 convolutions with stride [1 1] and padding [0 0 0 0] |

It will be appreciated by those skilled in the art that the generator network 305 and the discriminator network 306 may be adapted to conform to the parameter settings for the cGAN system 102, for example a different image size would impact the output size of the reshape layer 505.

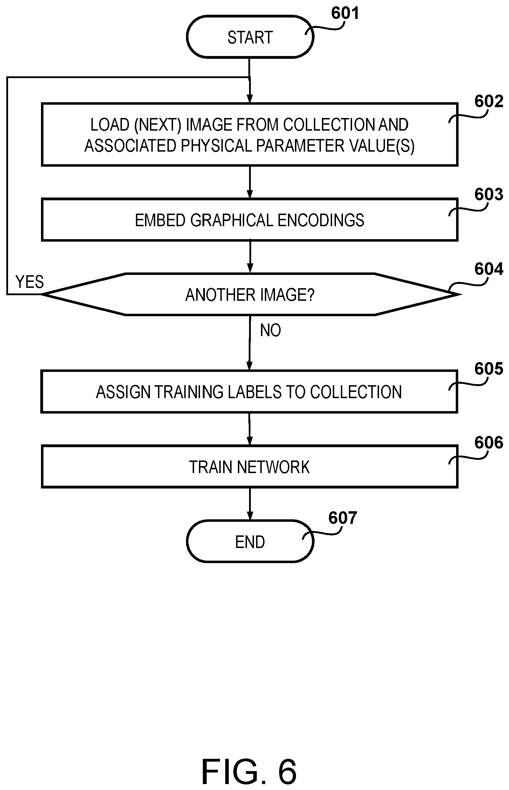

A procedure for training the cGAN system 102 is shown in Figure 6.

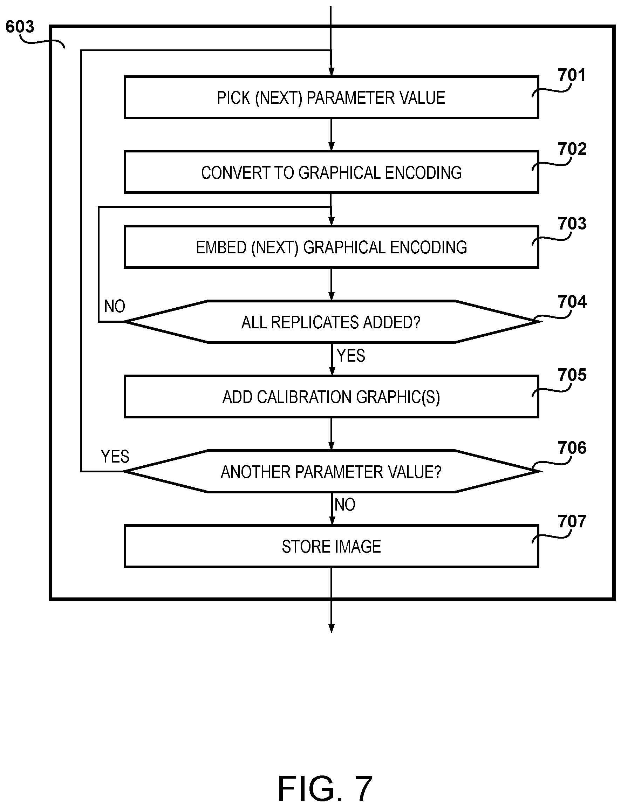

The procedure is initiated at 601, and at step 602 an image is loaded from the image data 301, along with the numerical data 302 for the loaded image. In other words, an image is loaded from a collection of images of components, along with one or more physical parameter values relating to the component depicted in that image. At step 603, a graphical encoding is embedded into the image by the image encoder 303. This process will be described further with reference to Figure 7. At step 604, a question is asked as to whether there are any further input images in the image data 301. If so, control returns to step 602 and the next image is loaded. If not, then in the present embodiment, control proceeds to step 605 where the collection of input images comprising the image data 301, now with embedded graphical encodings, are assigned their training labels by the label generator 304.

The model in the cGAN system 102 is then trained at step 607. In the present embodiment, an Adam optimiser is used in training. As described previously, a plurality of graphical encodings are embedded in the image data 301 by the image encoder 303. Hence, the generator network 305 generates generated images 307 with such graphical encodings. In the present embodiment, they are duplicated, hence there are pairs of physical parameter values embedded in each image. An error metric, representing the absolute error between two pairwise values, may therefore be computed during each iteration of the training process. In an embodiment, this error is incorporated into the loss function of both the generator network 305 and the discriminator network 306 and is configured to operate as a penalty function. In this way, the cGAN system 102 is trained to discriminate and generate images with a low pairwise error. In the present embodiment, a Wasserstein metric is incorporated in the loss function to stabilise training.

In the present embodiment, the pairwise error is monitored in real time and the training process may be halted once it converges. At this point, learning rates can be adjusted and training can continue until a new convergence point is reached. The error metric may also aid in selecting images with low pairwise error during network exploitation.

Should a greater number of replicas of each graphical encoding be embedded by the image encoder 303, the error metric could then be defined as the difference between the largest and smallest value.

The loss functions for the generator network 305 and discriminator network 306 are set out below in pseudocode:

**Generator Network Loss Function**

```
% Predictions for generated data with the generator.
[XGenerated, stateG] = forward(netG, Z, T);
YPredGenerated = forward (netD, XGenerated, T);
% The Pair-Wise error calculation
errorPenalty = decodingErrorPenalty(XGenerated, decoder);
% Calculate probabilities.
```

```
probGenerated = sigmoid(YPredGenerated);
% Calculate the generator score.
scoreG = mean(probGenerated);
% Calculate the loss.

                 lossG = -mean(YPredGenerated) + errorPenalty;

% Calculate the gradients
gradientsG = dlgradient(lossG, netG.Learnables);
```

**with**
**Input parameters:**

netG - the current generator network
netD - the current discriminator network
Z - random latent variables (20 in this case)
T - vector of labels (categories - an integer from 1 to 6)

**Output parameters:**

lossG - the value of the generator's loss function
gradientG - generator's gradients
scoreG - generator's score

**Discriminator Network Loss Function**

```
Predict 'real data' from the discriminator network.
dlYPred = forward(netD, X, T);
% Predictions 'generated data with the discriminator network.
[XGenerated, stateG] = forward(netG, Z, T);
YPredGenerated = forward (netD, XGenerated, T);
% The Pair-Wise error calculation.
errorPenalty = decodingErrorPenalty(XGenerated, decoder);
% Calculate probabilities.
probGenerated = sigmoid(YPredGenerated);
probReal = sigmoid(dlYPred);
% Calculate the discriminator score.

         scoreD = (mean(probReal) + mean(1-probGenerated)) / 2;

% Calculate the loss.

         lossDUnregularized = mean(YPredGenerated - dlYPred);

% Calculate and add the gradient penalty.
epsilon = rand([1 1 1 size(X,4)],like=X);

               XHat = epsilon.*X + (1-epsilon).*XGenerated;

YHat = forward(netD, XHat, T);
% Calculate gradients.
gradientsHat = dlgradient(sum(YHat),XHat,EnableHigherDerivatives=true);

         gradientsHatNorm = sqrt(sum(gradientsHat.^2,1:3) + 1e-10);
```

```
gradientPenalty = s.WassersteincGANPenaltyMultiplier .* mean((gradientsHatNorm - 1).^2);
```

% Penalize loss.

```
lossD = lossDUnregularized + gradientPenalty + errorPenalty;
```

% Calculate the gradients of the penalized loss gradientsD = dlgradient(lossD, netD.Learnables);
**with**
**Input parameters:**

netG - the current generator network
netD - the current discriminator network
X - set of images to be tested by the discriminator
Z - random latent variables (20 in this case)
T - vector of labels (categories - an integer from 1 to 6)

**Output parameters:**

lossD - the value of the discriminator's loss function
gradientD - discriminator's gradients
scoreD - discriminator's score

As will be understood from the pseudocode above and the network structures of Figures 4 and 5, the training of the cGAN system 102 requires a vector of labels attached to each image. In the present embodiment, the label assigned to each image by the label generator 304 is based on a physical output parameter value associated with each image that is indicative of the performance of the component depicted in the image. In the present embodiment, the label is a numerical value indicating the design preference, for example lower numbers indicating a better design and higher numbers indicating a worse design, according to a particular physical output parameter value. In this way, the image data 301 is segmented into groups corresponding to the physical output parameter value, whereby the groups are defined by the applied labels.

In an embodiment, in order to avoid bias for a particular group in the labelling of the images, an equal binning strategy is adopted such that an equal (or as close to equal as possible) number of images is assigned to each group.

The algorithm for equal binning may be performed by, first, calculating the number of images per group by dividing the total number of images in the image data 301 by the desired number of groups, rounding up if necessary. For instance, given a training set of 35728 images and a desired group count of 6, the calculation would be $ceil(35728 \div 6) = 5955$ where $ceil$ is the ceiling function. As this division does not yield an integer, it implies that some bins (the last two in this case) will contain 5954 elements, ensuring the total remains 35728. The images in the image data 301 are then arrange in ascending order according to the chosen physical output parameter. The first 5955 images may then be assigned to group 1. This may be repeated for the first four groups, with the next 5954 images being assigned to each of the fifth and sixth groups.

The groups derived using this procedure are then converted to labels by the label generator 304 and assigned to each image in the image data 301. It will be appreciated that the bin width could be non-equal should a different distribution be required.

Following training, the procedure ends at 607 and the model is ready to be used for producing new output data.

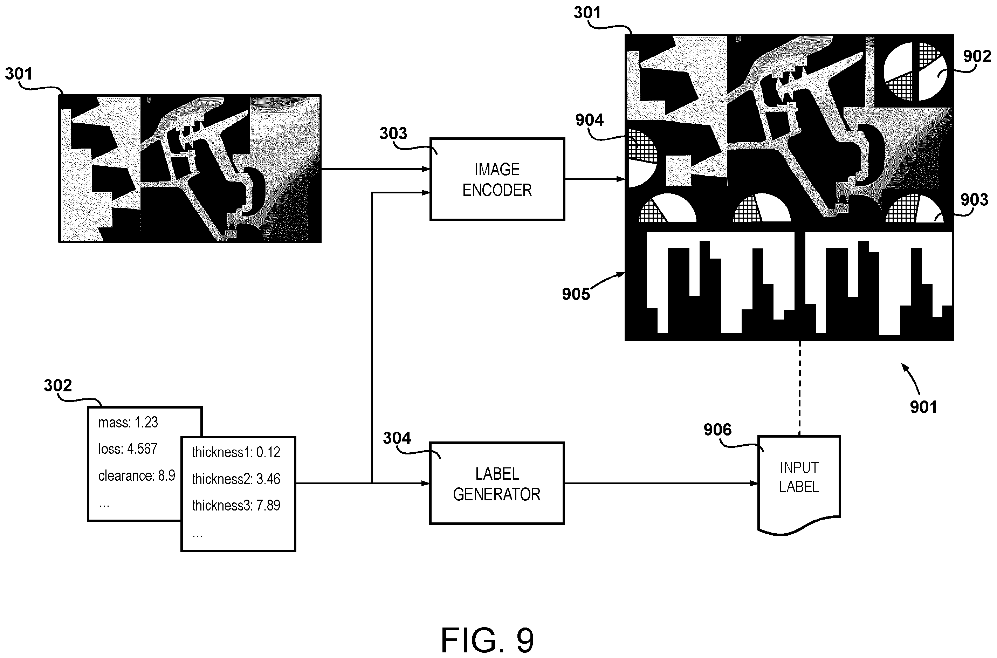

Step 603 is shown in more detail in Figure 7. At step 701, a physical parameter value is picked from numerical data 302. This is then converted to a graphical encoding at step 702. In an embodiment, the graphical encoding is a bar or a glyph, but may be any other form of graphical encoding to represent the physical parameter value. In the present embodiment they are then embedded in duplicate via the loop formed by step 703 (embedding the encoding) and step 704 (checking that all replicates have been added). In other embodiments, even higher numbers of replicates may be embedded. It has been found that adding one or more additional graphical encodings of the same physical parameter value improves model performance. Referring briefly to Figure 9, physical parameter values associated with an image of a component may be added to the image by the image encoder 303 multiple times, using both bars and glyphs. In the present example, the glyphs are semicircles with a shaded portion representing the quantity of the physical parameter value.

Referring again to Figure 7, at step 705 one or more calibration graphics are embedded the image. It has been found that adding calibration graphics of the same type as the other graphical encodings improves training accuracy. For example, a calibration graphic may comprise a full-scale bar. Output images may be checked to ensure this calibration graphic is as expected, hence full-scale in this example. Alternatively, the length or size of the calibration graphic may be used to scale the other graphical encoding embedded in the output images. In an embodiment the location of the calibration graphics may change from image to image to avoid the model simply recognising repeating shapes, rather than matching graphical encodings image-to-image. At step 706 a question is asked as to whether another parameter value needs to be embedded. If so, control returns to step 701. If not, control proceeds to step 707 where the image is stored back to the image data 301 ready for use by the generator network 305 and discriminator network 306.

**Example**

A seal assembly for the secondary air system of an aero gas turbine engine is shown in various views in Figures 8A through 8D. Figure 8B is an enlargement of the boxed area of Figure 8A; similarly Figure 8D is an enlargement of the boxed area of Figure 8C.

The quality of the seal 801 has a direct impact on specific fuel consumption. Maintaining the relative gap between a static and rotating interface as constant as possible throughout an engine flight cycle is a highly coupled multi-disciplinary problem, as relative movements are affected by the thermal physics, the air system behaviour, the effect of flight loads and their interactions.

The seal assembly 801 is constituted by a double-sided labyrinth seal: a system of two seals, an outer seal 802 and with a rotor diameter smaller than the static structure diameter, and an inner seal 803 with a rotor diameter larger than the static structure diameter. A dataset of simulation results was generated. In this example, 82825 images constituted the dataset.

The geometry of the assembly was parametrised, with Figures 8A and 8B showing the variable geometric parameters. The parameters are set out in Table 4 below:

**Table 4**

| Parameter | Description |
| --- | --- |
| 1 | Seal static thickness |
| 2 | Seal rotor thickness |
| 3 | Arm thickness |
| 4 | Seal 2 rotor thickness |
| 5 | Seal 1 rotor thickness |
| 6 | Diaphragm thickness |
| 7 | Cob width |
| 8 | Categorical variable denoting one of three rotor material options |

Figures 8C and 8D show some of the outputs of interest, which are the mass of the assembly, the seal running clearance low power, the seal running clearance at cruise speed, metal temperature at location R, radial stress at location D, peak hoop stress at location C, metal temperature at location S and the worst principal stress at location F.

These physical parameter values were embedded in the image data 301 according to the procedure set out in Figure 7 by the image encoder 303, in the form of bars 901 and glyphs 902 as shown in Figure 9. In the present example, the graphical encodings are embedded in duplicate, for example glyphs 903 and 904 are duplicates of each other. Calibration graphics 905 are also included, which in the present example are full-scale bars. In parallel, the label generator 304 produces a label 905 associated with the image data 301.

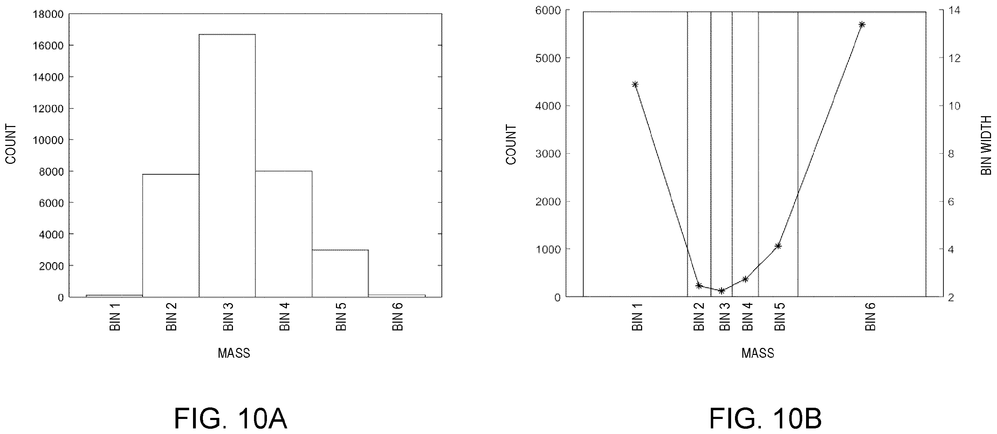

In the present example, the physical parameter value of interest was the mass of the seal assembly 801, and the number of groups was set to six. Hence, an image could be assigned a label corresponding to its mass, ranging from 1 (a good design; lightweight) to 6 (a bad design; too heavy). Figure 10A shows the distribution of the mass variable in the training set with bins of equal width - it may be observed that this is almost a perfect normal distribution and hence only a small number of images would be assigned labels 1 and 6, while almost half of all images will be assigned label 3. As a result, the quality of the trained cGAN system 102 will exhibit a bias towards the third group. If these are the values that will subsequently be of highest interest, then such distribution of images may be suitable.

However, if we intend to use the trained cGAN system 102 for producing images of low mass designs, then the equal binning procedure described previously may be employed to expose the generator network 305 and discriminator network 306 to a sufficient number of images from the first group. The result of the equal binning procedure is shown in Figure 10B which shows the substantially-equal bin counts and different bin widths.

The training continued for 170 epochs and around 106 hours, when a convergence of the of the decoding error was observed. The decoding error refers to the pair-wise error described previously that is added to the loss function of the generator to encourage the Adam optimizer to actively reduce this error. It was observed that the loss function has also reached a convergence. At the same time, it is worth mentioning the divergence of the discriminator and the generator scores. Such divergence reduces the rate of improvement of the quality of the generator and the discriminator. In such cases the system is no longer learning and often starts degrading the quality of the generated images. Potential solutions include halting the training, reducing the learning rates before restarting, or even implementing an adaptive learning rate based on divergence detection.

The stability and the quality of the training process can be improved by using larger batch sizes (in our case 50), when a GPU with larger memory is available. A greater number or more capable devices may also reduce the training time.

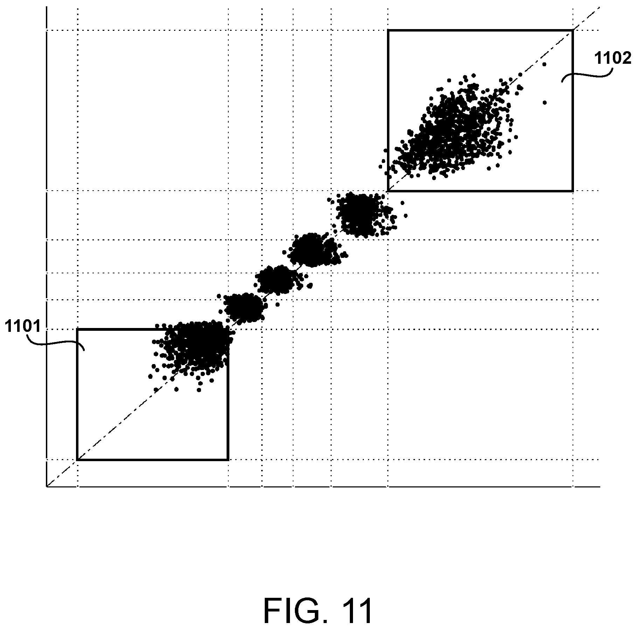

Figure 11 illustrates the comparison between the mass values predicted (x-axis) by the cGAN system 102 (x-axis) and values obtained from a thermo-mechanical simulation (y-axis). To do this, the mass values were decoded from the graphical encodings for mass in the generated images. To run the simulation, input variables were decoded from the corresponding graphical encoding in the generated images. The points in a first group of points 1101 represent the values generated for the group labelled 1 by the label generator 304, corresponding to lightweight designs. The points in a second group of points 1102 represent the values generated for the group labelled 6 by the label generator 304, corresponding to the heaviest designs. While the coefficient of determination indicates the overall dispersal of values from the central line, a different metric - maximum absolute error percentage (MAE%) - can be used as a more representative accuracy measure. It is calculated as the absolute difference between the predicted and the simulated values, divided by the range for each output and multiplied by 100:

$$AE\%(i) = 100 \frac{Y_{predicted}(i) - Y_{simulated}(i)}{\max(Y_{simulated}) - \min(Y_{simulated})}$$ **[Equation 1]**

$$MAE\% = \max(AE\%)$$ **[Equation 2]**

In the present case, $R^2 = 0.96209$ and MAE% = 2.6671.

The principal conclusion from Figure 11 is the capability to accurately target individual groups, for example the first group 1101. The points positioned closer to the diagonal line represent designs with higher prediction accuracy. The distribution of points within each category is influenced by several factors, primarily the resolution of the image and the corresponding decoding accuracy. The training state and duration of the network also play a crucial role in this distribution.

In testing, it has been observed that the cGAN system 102 is capable of generating and decoding 30 images (i.e. new designs) per second (on a single CPU, or more if run in parallel), while an equivalent finite element analysis (FEA) model would take approximately seven minutes per design. Most of the designs produced by the cGAN system 102 fall within the targeted category, after being validated against the FEA results, with a small overspill into adjacent category, due to image resolution. This capability can be exploited to support design exploration, optimisation and surrogate modelling.

Various examples have been described, each of which comprise one or more combinations of features. It will be appreciated by those skilled in the art that, except where clearly mutually exclusive, any of the features may be employed separately or in combination with any other features and the invention extends to and includes all combinations and sub-combinations of one or more features described herein.

**Claims**

1.  A method comprising training a conditional Generative Adversarial Network (cGAN), the cGAN having a generator and a discriminator, said method comprising:

    obtaining a collection of images of components, each image having a physical parameter value relating to the component associated therewith;
    for each one of the collection of images of components, embedding a plurality of graphical encodings into the image that encode the associated physical parameter value;
    training the cGAN using the collection of images of components with their embedded plurality of graphical encodings.

2.  The method of claim 1, in which the training process comprises optimising the generator and the discriminator using a loss function incorporating an error metric that measures the difference in values encoded by the plurality of graphical encodings.

3.  The method of claim 1 or claim 2, in which the plurality of graphical encodings comprises one or more of:

bars;
glyphs.

4. The method of any preceding claim, in which the plurality of graphical encodings of the physical parameter value are different kinds of graphical encodings.

5. The method of any preceding claim, further comprising, for each one of the collection of images of components, embedding one or more calibration graphics into the image to calibrate the plurality of graphical encodings against.

6. The method of claim 5, in which a position of one or more calibration graphics is varied between each image.

7. The method of any preceding claim, in which the physical parameter value is one of:

a physical input parameter value relating to properties of the component;
a physical output parameter value relating to performance of the component.

8. The method of any one of claims 1 to 6, further comprising, for each image in the collection, embedding a plurality of graphical encodings of a plurality of physical input parameter values, each of which relates to properties of the component.

9. The method of any one of claims 1 to 6, for each image in the collection, embedding a plurality of graphical encodings of a plurality of physical output parameter values, each of which relates to performance of the component.

10. The method of any one of claims 1 to 6, wherein:

the physical parameter value is a physical output parameter value relating to performance of the component;
the method further comprises, for each image in the collection, labelling the image as a member of one of a plurality of groups corresponding to the physical output parameter value, thereby creating a collection of labelled images;
training the cGAN is performed using the collection of labelled images, and includes training the discriminator to discriminate between images belonging to the plurality of groups.

11. The method of claim 10, in which the labelling process comprises an equal binning procedure, such that the maximum difference in size between the plurality of groups is one.

12. The method of claim 10 or claim 11, further comprising training the generator of the cGAN to generate images of components that are labelled as a member of one of the plurality of groups by the discriminator.

13. The method of any preceding claim, in which images in the collection of images of components are one of:

photographs;
optical three-dimensional scans;
X-ray images;
computationally-generated images.

14. Instructions executable by a computer that, when executed by the computer, cause the computer to perform the method of any preceding claim.

15. A computer-readable medium having the instructions of claim 14 encoded thereon.

FIG. 1

FIG. 2

EP 4 668 229 A1

FIG. 3

FIG. 4

FIG. 5

```
                    ┌──────────────┐ 601
                    │    START     │
                    └──────┬───────┘
                           │
   ┌───────────────────────┼──────────────────────────┐
   │                       ▼                            602
   │   ┌────────────────────────────────────────────┐
   │   │ LOAD (NEXT) IMAGE FROM COLLECTION AND       │
   │   │ ASSOCIATED PHYSICAL PARAMETER VALUE(S)      │
   │   └──────────────────────┬─────────────────────┘
   │                          │
   │                          ▼                         603
   │   ┌────────────────────────────────────────────┐
   │   │        EMBED GRAPHICAL ENCODINGS           │
   │   └──────────────────────┬─────────────────────┘
   │                          │
   │  YES                     ▼                         604
   └──────────<   ANOTHER IMAGE?   >
                             │
                             │ NO
                             ▼                          605
       ┌────────────────────────────────────────────┐
       │   ASSIGN TRAINING LABELS TO COLLECTION      │
       └──────────────────────┬─────────────────────┘
                              │
                              ▼                         606
       ┌────────────────────────────────────────────┐
       │              TRAIN NETWORK                  │
       └──────────────────────┬─────────────────────┘
                              │
                              ▼                         607
                    ┌──────────────┐
                    │     END      │
                    └──────────────┘
```

# FIG. 6

603

701 PICK (NEXT) PARAMETER VALUE

702 CONVERT TO GRAPHICAL ENCODING

703 EMBED (NEXT) GRAPHICAL ENCODING

704 ALL REPLICATES ADDED?

NO

YES

705 ADD CALIBRATION GRAPHIC(S)

706 ANOTHER PARAMETER VALUE?

YES

NO

707 STORE IMAGE

FIG. 7

FIG. 8C

FIG. 8D

FIG. 8A

FIG. 8B

FIG. 9

EP 4 668 229 A1

FIG. 10B

FIG. 10A

FIG. 11

## EUROPEAN SEARCH REPORT

**Application Number**

EP 25 18 4139

**DOCUMENTS CONSIDERED TO BE RELEVANT**

| Category | Citation of document with indication, where appropriate, of relevant passages | Relevant to claim | CLASSIFICATION OF THE APPLICATION (IPC) |
|---|---|---|---|
| X | US 2023/140028 A1 (KEANE ANDREW J [GB]) 4 May 2023 (2023-05-04) * the whole document * ----- | 1-15 | INV. G06V10/82 |
| A | Wu Huihuan: "Topology Optimization of Electric Motors Based on Finite Element Computation", , 31 August 2022 (2022-08-31), XP093311919, Retrieved from the Internet: URL:https://theses.lib.polyu.edu.hk/bitstream/200/12355/3/6803.pdf [retrieved on 2025-09-05] * the whole document * ----- | 1-15 | |

**TECHNICAL FIELDS SEARCHED (IPC)**

G06V

The present search report has been drawn up for all claims

| Place of search | Date of completion of the search | Examiner |
|---|---|---|
| The Hague | 9 September 2025 | Ionescu, Tudor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 4139

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2025

| Patent document cited in search report | Publication date | Patent family member(s) | | Publication date |
|---|---|---|---|---|
| US 2023140028 A1 | 04-05-2023 | EP | 4177829 A1 | 10-05-2023 |
| | | GB | 2612588 A | 10-05-2023 |
| | | US | 2023140028 A1 | 04-05-2023 |

EPO FORM P0459

## REFERENCES CITED IN THE DESCRIPTION

**Patent documents cited in the description**

- GB 2408943 A
- GB 2408944 A
- US 967620